# EUROPÄISCHE PATENTSCHRIFT

(11) **EP 1 182 077 B1**
(45) Veröffentlichungstag und Bekanntmachung des Hinweises auf die Patenterteilung: **31.10.2007**
(21) Anmeldenummer: 01117014.9
(22) Anmeldetag: 12.07.2001
(51) Int. Cl.: B60K 31/04, B60W 30/14

(54) **Wähleinrichtung zur Einstellung der Fahrgeschwindigkeit eines Fahrzeugs**
Selector device for setting and displaying target cruise speed of a vehicle
Appareil pour la sélection et l'affichage d'une vitesse de consigne dans un régulateur de vitesse pour véhicules

(30) Priorität: 25.08.2000 DE 10041745
(43) Veröffentlichungstag der Anmeldung: 27.02.2002
(73) Patentinhaber: Bayerische Motoren Werke Aktiengesellschaft, 80809 München (DE)
(72) Erfinder: Barbehoen, Kai, 81249 München (DE); Girke, Joachim, 94315 Straubing (DE)

(56) Entgegenhaltungen:
- WO-A-86/00049
- DE-A- 10 000 094
- DE-A- 19 755 470
- DE-A- 19 850 686
- DE-C- 19 646 104
- DE-U- 29 703 902

## Beschreibung

Die Erfindung betrifft eine Wähleinrichtung zur Einstellung der Fahrgeschwindigkeit eines Fahrzeugs gemäß dem Oberbegriff des Anspruchs 1.

Solche Wähleinrichtungen sind beispielsweise unter der Bezeichnung "Tempomat" (eingetragene Marke der DaimlerChrysler AG) bekannt. Zur Komforterhöhung, insbesondere bei langen Fahrten mit konstanter Geschwindigkeit, ist es möglich, über ein Bedienelement eine Fahrzeuggeschwindigkeit anzuwählen, die dann automatisch und ohne Aktion des Fahrers geregelt wird (FGR-Modus).

Überdies ist es bekannt, das Bedienelement (z.B. einen Bedienhebel) und eine zugeordnete Steuerung derart auszubilden, dass durch Betätigen des Bedienelements die Fahrzeuggeschwindigkeit erhöht oder gesenkt werden kann. Bei entsprechend langer Betätigung des Bedienelements können damit auch andere als die eingestellten Fahrzeuggeschwindigkeiten angefahren werden. In diesem Zusammenhang wird auf die DE 196 46 104 C1, die DE 35 43 163 A1 sowie die EP 0 188 455 B1 hingewiesen.

Aus der DE 198 50 686 A1 ist eine gattungsgemäße Wähleinrichtung zur Einstellung der Fahrgeschwindigkeit eines Fahrzeugs bekannt, bei der durch eine entsprechende Ausbildung des Bedienelements und der Steuereinrichtung zumindest zwei Fahrzeuggeschwindigkeitswerte markiert und diese durch Betätigen des Bedienelements angefahren werden können.

Bei der konstruktiven Umsetzung einer solchen Wähleinrichtung ist jedoch problematisch, dass das Bedienelement bei einer möglichst geringen Anzahl von betätigbaren Kontakten eine Vielzahl möglichst selbsterklärender Funktionen vorweisen sollte. Ferner ist dem Bediener beispielsweise zu signalisieren, wenn eine maximale Anzahl einprogrammierbarer Fahrzeuggeschwindigkeitswerte erreicht ist. Überdies sollte eine einfache Programmierung und Aktivierung der Wähleinrichtung möglich sein.

Diese Probleme zu lösen, ist Aufgabe der vorliegenden Erfindung.

Diese Aufgabe wird bei einer gattungsgemäßen Wähleinrichtung zur Einstellung der Fahrzeuggeschwindigkeit eines Fahrzeugs durch die kennzeichnenden Merkmale des Anspruchs 1 gelöst.

Demgemäß wird auf einem Display, auf dem die gesetzten Geschwindigkeitswerte anzeigbar sind, zusätzlich eine durch die Betätigung eines Bedienelements bewegliche Zeigermarkierung - im folgenden als Cursor bezeichnet - dargestellt. In einem Betriebsmodus des Steuergerätes, der nachfolgend als Programmiermodus bezeichnet wird, sind die gesetzten Fahrzeuggeschwindigkeiten bzw. die zu setzenden Fahrzeuggeschwindigkeiten durch Anfahren mit dem Cursor setz- und löschbar. In einem zweiten Betriebsmodus des Steuergeräts, der nachfolgend als FGR-Modus (Modus für Fahrgeschwindigkeitsregelung) bezeichnet wird, können die gesetzten Fahrzeuggeschwindigkeitswerte durch Anfahren mit dem Cursor aktiviert werden.

Damit wird ergänzend zur Anzeige von programmierten Fahrzeuggeschwindigkeitswerten ein Zeiger eingesetzt, der sich zweckmäßigerweise in Form und/oder Farbe und/oder Anordnung von den normalen Markierungen für die gesetzten Fahrzeuggeschwindigkeiten unterscheidet. Mittels dieses Zeigers kann die Programmierung unterstützt sowie der aktuelle Status der Wähleinrichtung angezeigt werden. Vorzugsweise kann der Cursor auch bei einem stillstehenden Fahrzeug bedient werden.

Mittels des Cursors kann zudem eine Information über die Auswahl eines bestimmten Betriebsmodus abgegeben werden. Beispielsweise können durch eine unterschiedliche Farbe, eine unterschiedliche Blinkfrequenz oder durch einen abgeschalteten Cursor die Zustände "Programmiermodus", "FGR-Modus" oder "deaktiverter ACC-Modus" dargestellt werden.

Eine besonders bevorzugte Ausführungsform ist dadurch gekennzeichnet, dass der Cursor zumindest im Programmiermodus beim Durchlaufen eines bestimmten Geschwindigkeitsbereichs um eine gesetzte Geschwindigkeitsmarke genau auf diese Fahrzeuggeschwindigkeit gesetzt wird. Damit läßt sich ein Mindestabstand zwischen zwei setzbaren Fahrzeuggeschwindigkeiten sicherstellen. Erreicht der Cursor bei seiner Bewegung den entsprechenden Fahrzeuggeschwindigkeitsbereich, so springt er direkt auf die gesetzte Fahrzeuggeschwindigkeit. Ein entsprechendes Beispiel wird im nachfolgenden Ausführungsbeispiel noch erläutert. Besonders vorteilhaft erweist sich diese Ausführungsform für die funktionelle Ausgestaltung des Bedienelements. Da der Cursor im Bereich um bestehende Geschwindigkeitsmarken lediglich auf die entsprechende Marke gesetzt werden kann, kann ein abgesetzter Löschbefehl eindeutig dieser Geschwindigkeitsmarke zugeordnet werden. Damit wird eine Mehrdeutigkeit durch ungenaue Positionierung ausgeschlossen. Mittels dieser Maßnahme können die Bedienfunktionen "Löschen" und "Setzen" somit durch eine jeweils gleiche Betätigung des Wählhebels realisiert werden.

Befindet sich die Wähleinrichtung im FGR-Modus, so kann der Cursor gemäß einer spezifischen Ausführungsform lediglich gesetzte Fahrzeuggeschwindigkeiten anfahren.

Vorzugsweise ist es lediglich möglich, eine bestimmte Anzahl von Fahrzeuggeschwindigkeiten zu setzen. Bei Erreichen dieser Maximalzahl von Fahrzeuggeschwindigkeitsmarken kann der Cursor - auch im Programmiermodus - lediglich auf bereits gesetzte Fahrzeuggeschwindigkeitswerte eingestellt werden. Auf diese Weise kann dem Bediener selbsterklärend angezeigt werden, dass eine weitere Abspeicherung einer Fahrzeuggeschwindigkeit nicht möglich und vor dem Setzen einer weiteren Fahrzeuggeschwindigkeitsmarke ein bereits gesetzte Fahrzeuggeschwindigkeitsmarke zu löschen ist. Damit kann dem Bediener ohne zusätzliche Anzeige der Systemzustand mitgeteilt werden.

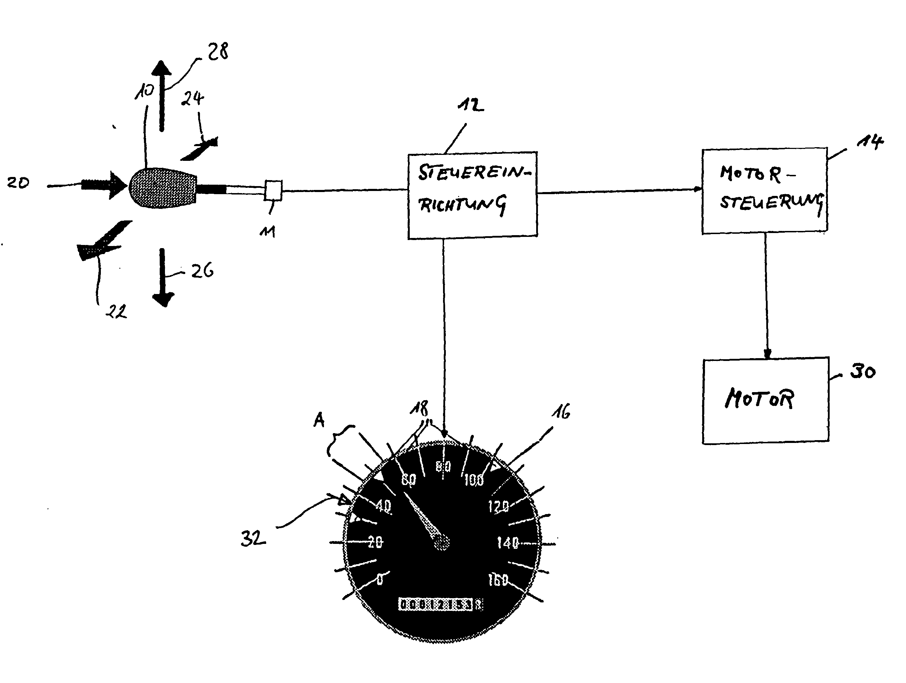

Ein einfaches Ausführungsbeispiel der vorliegenden Erfindung wird anhand der beiliegenden einzigen Figur nachfolgend näher erläutert.

Die Figur zeigt ein schematisches Blockschaltbild mit einem Lenkstockhebel 10, an dem ein Geber 11 angeordnet ist. Der Geber 11 ist mit einer Steuereinrichtung 12 verbunden, welche die vom Lenkstockhebel 10 bzw. dessen Geber 11 kommenden Signale auswertet und entsprechende Befehle an eine Motorsteuerung 14 weitergibt. Die Motorsteuerung 14 betreibt einen Motor 30 eines Fahrzeuges im FGR-Modus vorliegend in einer Weise, dass die angewählte Geschwindigkeit beibehalten wird. Entsprechende Verfahren und Vorrichtungen dafür sind aus dem Stand der Technik bekannt, so dass auf die Umsetzung des FGR-Modus nicht näher eingegangen wird.

Der Lenkstockhebel 10 kann zum einen nach oben und unten (Pfeile 26, 28) bewegt werden. Zudem kann der Lenkstockhebel 10 nach hinten und vorne (Pfeile 22, 24) bewegt werden. Schließlich ist es möglich, den Lenkstockhebel 10 in Axialrichtung analog einem Tipp-Schalter zu betätigen.

Die Steuereinrichtung 12 ist ferner mit einem Tachometer 16 verbunden, mit dem neben einer über eine Nadel angezeigte Fahrgeschwindigkeit weitere Daten angezeigt werden können. Dies wird nachfolgend erläutert.

Im Tachometer können verschiedene Geschwindigkeitsmarken 18 gesetzt werden, von denen jeweils eine für den FGR-Modus aktiverbar ist. Bei Aktivierung einer entsprechenden Geschwindigkeitsmarke wirkt die Steuereinrichtung 12 derart auf die Motorsteuerung 14 ein, dass die gewählte Geschwindigkeit beibehalten wird.

Beim vorliegenden Beispiel sind Geschwindigkeitsmarken bei den Geschwindigkeitswerten 30 km/h, 50 km/h und etwa 103 km/h gesetzt. Keine der Geschwindigkeitsmarken ist jedoch aktiviert.

Zusätzlich ist ein Zeiger 32 dargestellt, der unter Bedienung des Lenkstockhebels 10 entlang des äußeren Randes der Skala des Tachometers 16 verfahren werden kann. Beim vorliegenden Ausführungsbeispiel steht der Zeiger 32 auf einem Geschwindigkeitswert von etwa 35 km/h.

Die Steuereinrichtung 12 ist nun derart ausgebildet, dass folgende Funktionsweise realisierbar ist:

Prinzipiell sind drei Betriebsmodi der Wähleinrichtung möglich sind. In einem ersten Betriebsmodus ist die Wähleinrichtung inaktiv geschaltet und die Funktion zur Beibehaltung einer konstanten Fahrgeschwindigkeit deaktiviert. In diesem Fall erscheinen kein Zeiger 32 am Skalenrad des Tachometers 16 und keine gesetzten Geschwindigkeitsmarken 18.

Wird der Lenkstockhebel 10 in Pfeilrichtung 24 betätigt, so wird vorliegend die Funktion zur Beibehaltung einer konstanten Geschwindigkeit aktiviert (FGR-Modus). In diesem Fall erscheinen die bereits eingestellten Geschwindigkeitsmarken 18. Durch Betätigen des Lenkstockhebels in Pfeilrichtung 20 kann ein FGR-Modus für eine aktuell gefahrene Geschwindigkeit aktiviert werden.

Wird der Wählhebel 10 in Richtung des Pfeiles 22 bewegt, wird ein Programmiermodus ausgewählt. In diesem Fall erscheinen die gesetzten Geschwindigkeitsmarken 18 sowie der Zeiger 32.

Die Funktionsweise der Wähleinrichtung in den einzelnen Modi wird nun erläutert.

Wird der Programmiermodus aufgerufen, so bewirkt die Betätigung des Lenkstockhebels 10 nach oben oder unten (Pfeile 26, 28) eine Bewegung des Zeigers 32 in entsprechender Richtung entlang des äußeren Umfangs der Skala.

Wird der Zeiger 32 auf einen bestimmten Geschwindigkeitswert gesetzt, der nicht markiert ist und dann der Lenkstockhebel 10 in Axialrichtung 20 betätigt, so wird dadurch dieser Geschwindigkeitswert einprogrammiert und eine entsprechende Geschwindigkeitsmarkierung 18 erscheint auf dem Tachometer 16.

Jede Geschwindigkeitsmarkierung 18 umfasst jedoch einen Geschwindigkeitsbereich, über den der Cursor 32 nicht kontinuierlich bewegt werden kann, sondern lediglich auf die genaue Position der jeweiligen Geschwindigkeitsmarkierung gesetzt wird. Ein solcher Geschwindigkeitsbereich ist in der Figur bei der zweiten Geschwindigkeitsmarkierung dargestellt und mit dem Buchstaben A bezeichnet. Damit lässt sich ein Mindestabstand zwischen setzbaren Fahrzeuggeschwindigkeiten definieren. Im übrigen können Mehrdeutigkeiten ausgeschlossen werden. Bei Übereinstimmung des Zeigers 32 mit einer einprogrammierten Geschwindigkeitsmarkierung kann diese wiederum durch Betätigung des Lenkstockhebels 10 in Axialrichtung (Pfeil 20) gelöscht werden.

Insgesamt lassen sich bei der vorliegenden Wähleinrichtung nur eine bestimmte Anzahl von Geschwindigkeitsmarkierungen 18 setzen. Ist diese Maximalanzahl erreicht, so kann der Zeiger 32 auch im Programmiermodus lediglich genau auf den einzelnen Geschwindigkeitsmarkierungen bewegt werden. Damit wird dem Bediener angezeigt, dass die maximale Anzahl der speicherbaren Geschwindigkeitsmarken gesetzt ist. Vor dem Setzen einer anderen Geschwindigkeitsmarke muss eine bereits gesetzte Geschwindigkeitsmarke gelöscht werden.

Ist der FGR-Modus aktiviert, wird der Zeiger 32 durch Betätigen des Lenkstockhebels 10 zunächst eingeblendet und dann je nach Betätigungsrichtung in die beiden Pfeilrichtungen 26 und 26 jeweils zu den oben oder unten anschließenden Geschwindigkeitsmarken versetzt. Ist eine Geschwindigkeitsmarke angefahren, kann sie wiederum durch Drücken des Lenkstockhebels 10 aktiviert werden, so dass das Fahrzeug die dann gewählte Geschwindigkeit als Regelgeschwindigkeit möglichst beibehält. Eine aktivierte Geschwindigkeitsmarke wird durch eine andersartige optische Darstellung gekennzeichnet.

Durch eine verschieden Darstellung des Zeigers 32 (Farbe, blinken etc.) kann auch der gerade ausgewählte Modus kenntlich gemacht werden.

Natürlich stellt die obige Ausführungsform lediglich eine bestimmte Ausführungsvariante der vorliegenden Erfindung dar. So können Geschwindigkeitsmarken, Zeiger, Wähleinrichungsmodi etc. verschieden ausgestaltet werden. Erfindungswesentlich ist der zusätzlich zu den Geschwindigkeitsmarken darstellbare und mit dem Bedienelement bewegbare Zeiger.

Vorliegend wurde eine Wähleinrichtung zur Einstellung der Fahrgeschwindigkeit eines Fahrzeugs vorgestellt, bei der Bedienvorgänge deutlich vereinfacht sind. Überdies konnte eine Kosteneinsparung erreicht werden. Die beschriebenen Ausgestaltungen sind insbesondere dann zweckmäßig, wenn graphische Oberflächen variabel durch einen Anwender gestaltet werden können.

## Patentansprüche

1. Wähleinrichtung zur Einstellung der Fahrgeschwindigkeit eines Fahrzeugs mit einem Bedienelement (10),
mit einer Steuereinrichtung (12), welche mit dem Bedienelement (10) verbunden, mit einer Motorsteuerung (14) gekoppelt und derart ausgebildet ist, dass bei deren Aktivierung die Fahrzeuggeschwindigkeit automatisch geregelt wird (FGR-Modus), wobei zumindest zwei Fahrzeuggeschwindigkeitswerte (18) markierbar und diese durch Betätigen des Bedienelements (10) anfahrbar sind, und
mit einem Display (16), auf dem die markierten Geschwindigkeitswerte (18) anzeigbar sind,
**dadurch gekennzeichnet,**
**dass** auf dem Display zusätzlich zu den markierten Fahrzeuggeschwindigkeitswerten eine durch die Betätigung des Bedienelements (10) bewegliche Zeigermarkierung (32) darstellbar ist,
in einem Betriebsmodus des Steuergerätes (12) (Programmiermodus) die markierten Geschwindigkeitswerte oder zu markierende Geschwindigkeitswerte durch Anfahren mit der Zeigermarkierung (32) setz- und löschbar und in einem zweiten Betriebsmodus des Steuergerätes (12) (FGR-Modus) die gesetzten Geschwindigkeitswerte durch Anfahren mit dem Zeiger (32) aktivierbar sind.

2. Wähleinrichtung nach Anspruch 1,
**dadurch gekennzeichnet,**
**dass** sich die Zeigermarkierung (32) in Form und/oder Farbe und/oder Anordnung von den gesetzten Fahrzeuggeschwindigkeitswerten (Geschwindigkeitsmarken) unterscheidet.

3. Wähleinrichtung nach Anspruch 1 oder 2,
**dadurch gekennzeichnet,**
**dass** mittels der Darstellung der Zeigermarkierung (32) eine Information über die Aktivierung eines bestimmten Betriebsmodus abgebbar ist.

4. Wähleinrichtung nach einem der Ansprüche 1 bis 3,
**dadurch gekennzeichnet,**
**dass** zumindest im Programmiermodus die Zeigermarkierung (32) bei Durchlaufen eines bestimmten Geschwindigkeitsbereichs um eine gesetzte Fahrzeuggeschwindigkeit genau auf den jeweiligen gesetzten Fahrzeuggeschwindigkeitswert eingestellt wird.

5. Wähleinrichtung nach einem der vorhergehenden Ansprüche,
**dadurch gekennzeichnet,**
**dass** nur eine bestimmte Anzahl von Fahrzeuggeschwindigkeiten (18) programmierbar sind und bei Erreichen der Maximalzahl von setzbaren Geschwindigkeitsmarken die Zeigermarkierung (32) im Programmiermodus lediglich auf bereits gesetzte Geschwindigkeitswerte einstellbar ist.

6. Wähleinrichtung nach einem der vorhergehenden Ansprüche,
**dadurch gekennzeichnet,**
**dass** im FGR-Modus mit dem Cursor (32) durch Betätigen des Bedienelements (10) lediglich die gesetzten Geschwindigkeitsmarken (18) anfahrbar sind.

7. Wähleinrichtung nach einem der vorhergehenden Ansprüche,
**dadurch gekennzeichnet,**
**dass** im Programmiermodus durch eine bestimmte Betätigung des Wählhebels (10) einerseits eine gesetzte Fahrzeuggeschwindigkeit (18) bei Übereinstimmung mit der Zeigermarkierung (32) löschbar und andererseits eine nicht programmierte Fahrzeuggeschwindigkeit an der Position der Zeigermarkierung setzbar ist.

## Claims

1. A selection device for adjusting the driving speed of a vehicle with an operating element (10), with a control device (12), which is connected to the operating element (10), coupled to an engine control (14) and configured in such a way that on activation thereof, the vehicle speed is automatically controlled (DSR mode), wherein at least two vehicle speed values (18) can be marked and these can be initiated by actuating the operating element (10), and with a display (16), on which the marked speed values (18) can be displayed, **characterised in that**, in addition to the marked vehicle speed values, a pointer marking (32) which can be moved by actuating the operating element (10) can be shown on the display, the marked speed values or the speed values to be marked can be set and deleted by using the pointer marking (32) in an operating mode of the control device (12) (programming mode) and the set speed values can be activated by using the pointer (32) in a second operating mode of the control device (12) (DSR mode).

2. A selection device according to claim 1, **characterised in that** the pointer marking (32) differs with regard to shape and/or colour and/or arrangement of the vehicle speed values set (speed markers).

3. A selection device according to claim 1 or 2, **characterised in that** information about the activation of a certain operating mode can be provided by displaying the pointer marking (32).

4. A selection device according to any one of claims 1 to 3, **characterised in that**, at least in the programming mode, the pointer marking (32) when running through a certain speed range around a set vehicle speed is adjusted precisely to the respective set vehicle speed value.

5. A selection device according to any one of the preceding claims, **characterised in that** only a certain number of vehicle speeds (18) can be programmed and on reaching the maximum number of settable speed markers, the pointer marking (32) in the programme mode can only be adjusted to already set speed values.

6. A selection device according to any one of the preceding claims, **characterised in that** only the set speed markers (18) can be initiated in the DSR mode with the cursor (32) by actuating the operating element (10).

7. A selection device according to any one of the preceding claims, **characterised in that**, in the programming mode, by means of a certain actuation of the selection lever (10), a set vehicle speed (18) can be deleted, on the one hand, on agreement with the pointer marking (32) and, on the other hand, a non-programmed vehicle speed can be set at the position of the pointer marking.

## Revendications

1. Dispositif de sélection pour le réglage de la vitesse de consigne d'un véhicule, comportant un élément de commande (10), un dispositif de commande (12) qui est relié à l'élément de commande (10), couplé à une commande de moteur (14) et conçu de telle manière que, lors de son activation, la vitesse du véhicule soit automatiquement régulée (mode FGR), dans lequel au moins deux valeurs de vitesse du véhicule (18) peuvent être marquées et peuvent être approchées en actionnant l'élément de commande (10), et un écran d'affichage (16), sur lequel les valeurs de vitesse marquées (18) peuvent être affichées,
**caractérisé en ce que**
l'on peut représenter sur le dispositif d'affichage, en plus des valeurs de vitesse du véhicule marquées, une marque d'indicateur (32) déplaçable en actionnant l'élément de commande (10), dans un mode de fonctionnement de l'appareil de commande (12), (mode de programmation), les valeurs de vitesse du véhicule marquées ou les valeurs de vitesse du véhicule à marquer peuvent être fixées ou effacées par approche avec la marque d'indicateur (32), et dans un deuxième mode de fonctionnement de l'appareil de commande (12), (mode FGR), les valeurs de vitesse fixées peuvent être activées par approche avec l'indicateur (32).

2. Dispositif de sélection selon la revendication 1,
**caractérisé en ce que**
la marque d'indicateur (32) se distingue des valeurs de vitesse fixées (marques de vitesse) par sa forme et/ou sa couleur et/ou sa disposition.

3. Dispositif de sélection selon la revendication 1 ou 2,
**caractérisé en ce qu'**
une information relative à l'activation d'un mode de fonctionnement déterminé peut être produite au moyen de la représentation de la marque d'indicateur (32).

4. Dispositif de sélection selon l'une quelconque des revendications 1 à 3,
**caractérisé en ce qu'**
au moins dans le mode de programmation, lorsqu'elle parcourt une plage de vitesses déterminée autour d'une vitesse de véhicule fixée, la marque d'indicateur (32) est réglée précisément sur la valeur respective fixée de la vitesse du véhicule.

5. Dispositif de sélection selon l'une quelconque des revendications précédentes,
**caractérisé en ce que**
seul un nombre déterminé de vitesses du véhicule (18) peut être programmé et, lorsque le nombre maximal de marques de vitesse pouvant être fixées est atteint, la marque d'indicateur (32) ne peut, dans le mode de programmation, être réglée que sur des marques de vitesse déjà fixées.

6. Dispositif de sélection selon l'une quelconque des revendications précédentes,
**caractérisé en ce que**
dans le mode FGR, seules les marques de vitesse fixées (18) peuvent être approchées avec le curseur (32) en actionnant l'élément de commande (10).

7. Dispositif de sélection selon l'une quelconque des revendications précédentes,
**caractérisé en ce que**
dans le mode de programmation, d'une part une vitesse de véhicule fixée (18) peut être effacée par coïncidence avec la marque d'indicateur (32) et d'autre part une vitesse de véhicule non programmée peut être fixée à la position de la marque d'indicateur, par un actionnement déterminé du levier de sélection (10).
